# EUROPÄISCHE PATENTSCHRIFT

(11) **EP 1 633 588 B1**
(45) Veröffentlichungstag und Bekanntmachung des Hinweises auf die Patenterteilung: **07.11.2012**
(21) Anmeldenummer: 04738554.7
(22) Anmeldetag: 25.05.2004
(51) Int. Cl.: B60J 7/20

(54) **VORRICHTUNG ZUM WAHLWEISEN BEWEGEN EINER HECKKLAPPE EINES FAHRZEUGES AUS EINER SCHLIESSSTELLUNG IN EINE AUFNAHMESTELLUNG UND IN EINE LADESTELLUNG**
DEVICE FOR SELECTIVELY MOVING A TAILGATE OF A VEHICLE FROM A CLOSED POSITION INTO A RECEIVING POSITION AND A LOADING POSITION
DISPOSITIF PERMETTANT DE DEPLACER SELECTIVEMENT UN HAYON D'UN VEHICULE, D'UNE POSITION FERMEE VERS UNE POSITION DE RECEPTION ET UNE POSITION DE CHARGEMENT

(30) Priorität: 30.05.2003 DE 10324757
(43) Veröffentlichungstag der Anmeldung: 15.03.2006
(73) Patentinhaber: Wilhelm Karmann GmbH, 49084 Osnabrück (DE)
(72) Erfinder: KUHR, Jürgen, 49086 Osnabrück (DE)
(74) Vertreter: Kronthaler, Schmidt & Coll.
(86) Internationale Anmeldenummer: PCT/DE2004/001085
(87) Internationale Veröffentlichungsnummer: WO 2004/108457

(56) Entgegenhaltungen:
- DE-A- 19 932 501
- DE-C- 4 445 944
- PATENT ABSTRACTS OF JAPAN Bd. 2000, Nr. 11, 3. Januar 2001 (2001-01-03) -& JP 2000 211373 A (TAKADA KOGYO KK), 2. August 2000 (2000-08-02)

## Beschreibung

Die Erfindung betrifft eine Vorrichtung zum wahlweisen Bewegen einer Heckklappe eines Fahrzeuges aus einer Schließstellung in eine vorne angehobene Aufnahmestellung zur Freigabe einer Aufnahmeöffnung in ihrem vorderen Bereich und eine hinten angehobene Ladestellung zur Freigabe einer Ladeöffnung gemäß dem Oberbegriff des Anspruchs 1. Durch die Aufnahmeöffnung hindurch kann ein manuell oder automatisch zu öffnendes Verdeck unterhalb einer Heckklappe verstaut werden.

Eine gattungsgemäße Vorrichtung ist aus der DE 101 35 581 A1 bekannt. Diese Vorrichtung weist einen an jeder Fahrzeugseite unter der Heckklappe angeordneten Hilfsrahmen auf, der einen im Bereich des Fahrzeughecks etwa mittig unter der Heckklappe gelagerten ersten Hebel aufweist, der bei geschlossener Heckklappe in Fahrzeuglängsrichtung nach vorne zeigt und an dessen freiem Ende ein weiterer Hebel gelagert ist, der von einem Hydraulikzylinder betätigbar ist. An dem ersten Hebel ist über ein Viergelenkscharnier die Heckklappe gelenkig angebracht.

Aus der DE 199 32 501 C2 ist eine Mechanik für eine an einem Fahrzeug angeordnete, schwenkbare Heckklappe bekannt, die wahlweise als Kofferraumdeckel um eine nahe ihrer Vorderkante angeordnete vordere Schwenkachse oder als Verdeckkastenklappe um eine nahe ihrer Hinterkante angeordnete hintere Schwenkachse schwenkbar ist, wobei die vordere Schwenkachse durch einen vorderen Viergelenkmechanismus und die hintere Schwenkachse durch einen hinteren Viergelenkmechanismus gebildet ist, die beiden Viergelenkmechanismen einen gemeinsamen Hebel aufweisen und beim jeweiligen Schwenken der Heckklappe der jeweils nicht aktive Viergelenkmechanismus entkoppelt ist.

In der DE 100 38 530 A1 ist ein Cabriolet-Fahrzeug mit einem unterhalb einer Heckklappe ablegbaren Dach beschrieben, wobei die Heckklappe zur Freigabe einer Aufnahmeöffnung für das Dach um ein karosseriefestes Schloßteil am Hinterrad der Heckklappe schwenkbar ist und zur Freigabe einer Ladeöffnung für den Kofferraum unter Lösen der für das Verschwenken in die Aufnahmestellung dienenden, über das Schloß erfolgenden Gelenkverbindung in ihre Ladestellung verschwenkbar ist. Zum Führen der Heckklappe sind zwei Hydraulik- oder Gasdruckzylinder vorgesehen, die winkelig zueinander angeordnet sind und sich beim Schwenken der Heckklappe in die eine oder die andere Richtung gegensinnig verlängern bzw. verkürzen.

Auch die DE 44 45 944 C1 offenbart ein Cabriolet-Fahrzeug mit einem unterhalb einer Heckklappe ablegbaren Dach gemäß dem Oberbegriff des Anspruchs 1.

Der Erfindung liegt die Aufgabe zugrunde, eine einfach aufgebaute Vorrichtung zum wahlweisen Bewegen einer Heckklappe aus einer Schließstellung in eine nach vorne angehobene Aufnahmeöffnung und eine nach hinten angehobene Ladestellung zu schaffen.

Diese Aufgabe wird mit den Merkmalen des Anspruchs 1 gelöst.

Die Unteransprüche sind auf vorteilhafte Ausführungsformen und Weiterbildungen der erfindungsgemäßen Vorrichtung gerichtet.

Die in ihrem Aufbau einfache und kostengünstige, erfindungsgemäße Vorrichtung, die ein Verstauen von Faltverdecken oder Hartdächern von Cabrioletfahrzeugen unter der Heckklappe ermöglicht, ist kostengünstig als Modulbaugruppe herstellbar, die einfach in ein dafür vorgesehenes Fahrzeug einbaubar ist.

Die Erfindung wird im Folgenden anhand schematischer Zeichnungen beispielsweise und mit weiteren Einzelheiten erläutert.

Es stellen dar:
- Fig. 1: eine perspektivische Ansicht einer ersten Ausführungsform der erfindungsgemäßen Vorrichtung,
- Fig. 2: eine perspektivische Ansicht einer zweiten Ausführungsform der erfindungsgemäßen Vorrichtung mit abgeändertem Antrieb,
- Fig. 3: eine schematische, seitliche Schnittansicht des Heckbereichs eines Fahrzeuges mit einer Seitenansicht auf die erfindungsgemäße Vorrichtung bei geschlossener Heckklappe,
- Fig. 4: eine Ansicht ähnlich der Fig. 2 zu Beginn der Bewegung der Heckklappe in die Aufnahmestellung,
- Fig. 5: eine Ansicht ähnlich der Fig. 2 mit in Aufnahmestellung befindlicher Heckklappe,
- Fig. 6: eine Ansicht ähnlich der Fig. 2 mit in Ladestellung befindlicher Heckklappe und
- Fig. 7: eine Ansicht einer gegenüber der Fig. 2 abgeänderten Ausführungsform der erfindungsgemäßen Vorrichtung.

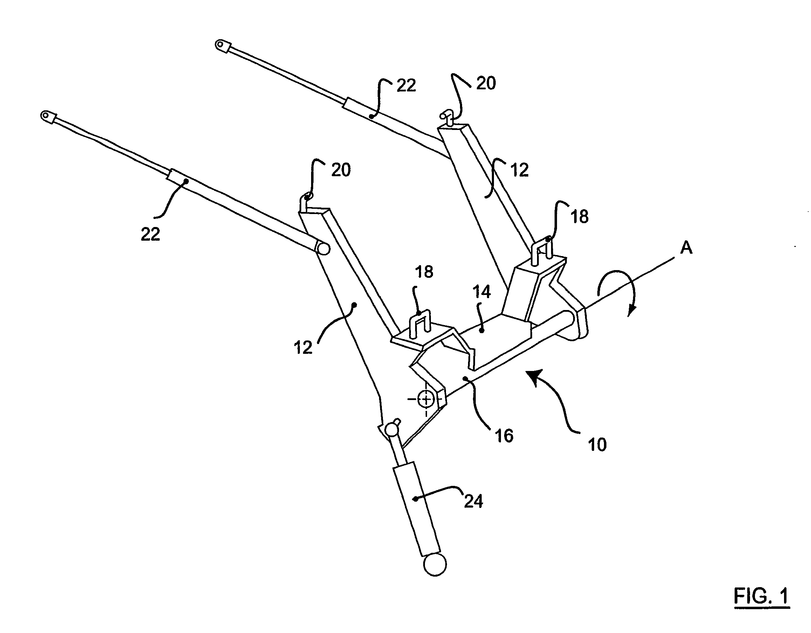

Gem. Fig. 1 weist eine insgesamt mit 10 bezeichnete Rahmenbaugruppe zwei seitliche Traghebel 12 auf, die über ein Stegbauteil 14 zu einer insgesamt U-förmigen Baugruppe starr verbunden sind. Die gem. Fig. 1 unteren und rechten Endbereiche der Traghebel 12 sind über eine Welle 16 starr verbunden, die in eine in Fig. 1 nicht dargestellte Lagerung beispielsweise im Bereich der hinteren Längsträger einer Fahrzeugkarosserie einsetzbar ist, so dass die Baugruppe insgesamt um die Achse A der Welle 16 schwenkbar ist. In der Figur links oberhalb der Achse A sind an jedem Traghebel bzw. dem Stegbauteil Schloßbügel 18 angeordnet, wobei mit der dargestellten Ausführungsform, bei der das Stegbauteil 14 als ein mehrfach abgebogenes Blechteil ausgebildet ist, das unterhalb der Schlossbügel 18 Plattformen für deren Befestigung bildet, besondere Stabilität erzielt wird. An seinem oberen Ende weist jeder Traghebel 12 einen Fangbügel bzw. Fanghaken 20 auf. Unterhalb der Fanghaken 20 greift an jedem Traghebel 12 ein elastisch nachgiebiges Element, beispielsweise ein Gasdruckdämpfer 22 an. Am unteren Bereich wenigstens eines der Traghebel greift gem. der Figur links unterhalb der Schwenkachse A ein Hydraulikzylinder 24 an.

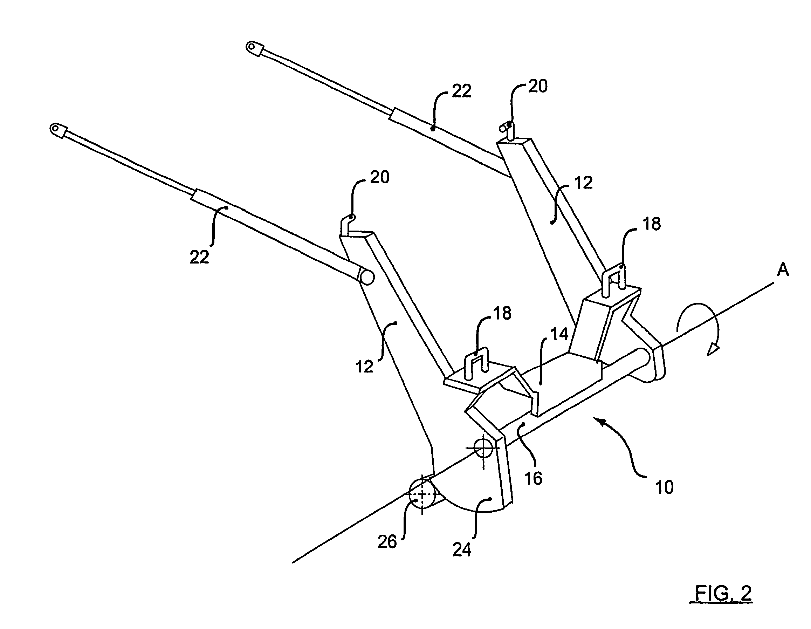

Die Anordnung gem. Fig. 2 ist gleich der der Fig. 1 mit der einzigen Ausnahme, dass der linke Traghebel 12 an seiner unteren Stirnseite mit einer Verzahnung 24 ausgebildet ist, in die ein Ritzel 26 eines fahrzeugfesten Antriebsmotors eingreift, so dass die Traghebel 12 durch Drehantreiben des Ritzels 26 verschwenkbar sind.

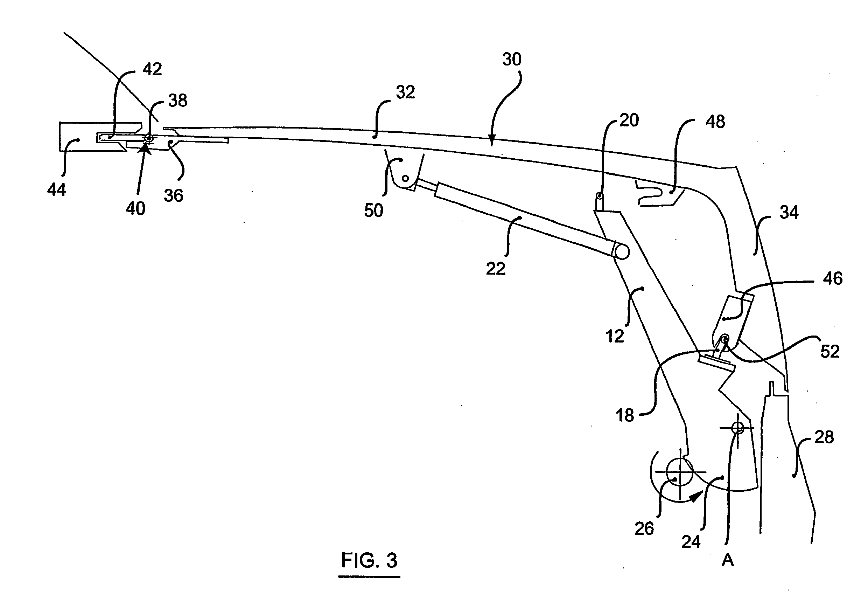

Fig. 3 zeigt die Baugruppe gem. Fig. 2 in ein Fahrzeug eingebaut. Die in Fig. 3 nicht dargestellte Welle 16 ist beispielsweise in den in Fig. 3 nicht dargestellten Längsträgern eines Fahrzeuges vor dessen Heckabschlußblech 28 gelagert, wobei sich die Schwenkachse A in kurzem Abstand vor und unterhalb der durch die Oberseite des Heckabschlußbleches gebildeten Ladekante befindet.

Eine in Fig. 3 in ihrer Schließstellung befindliche Heckklappe 30 eines Fahrzeuges weist im dargestellten Beispiel eine flache Oberwand 32 und eine nach unten abgebogene Rückwand 34 auf.

Die Unterseite der Oberwand 32 ist an ihrem vorderen Ende mittels einer Wasserfangplatte 36 verlängert, die nach vorne abgestuft ist. In der Stufe befindet sich die Schwenkachse 38 eines Scharniers 40 mit einer Scharnierplatte 42, die in einer nach hinten offenen, fahrzeugfesten Kulisse 44 aufgenommen ist.

An der Innenseite der Rückwand 34 ist nahe dem unteren Randbereich eine Schloßfalle 46 befestigt, die im dargestellten Zustand im Eingriff mit dem Schloßbügel 18 des Traghebels 12 ist.

An der Unterseite der Oberwand 32 ist in deren hinterem Bereich eine nach vorne offene Fangkulisse 48 befestigt, die sich im dargestellten Zustand hinter dem Fanghaken 20 des Traghebels 12 befindet. Der Gasdruckdämpfer 22 greift unterhalb des Fanghakens 20 am Traghebel 12 und an einer Lagerkonsole 50 an, die im dargestellten Beispiel etwa in der Mitte der Längserstreckung der Oberwand 32 befestigt ist.

In der dargestellten Ruhestellung ist der Traghebel 12 schräg nach vorne und oben gerichtet. Er kann mittels des Ritzels 26 um die Schwenkachse A verschwenkt werden. Wie aus Fig. 1 ersichtlich, ist vorteilhafterweise an jeder Seite des Fahrzeuges ein Traghebel 12 mit den zugehörigen Bauteilen vorgesehen und gehört das Ritzel 26 zu einem an der Fahrzeugstruktur befestigten Antriebsmotor.

Im Folgenden wird die Funktion der beschriebenen Anordnung erläutert:

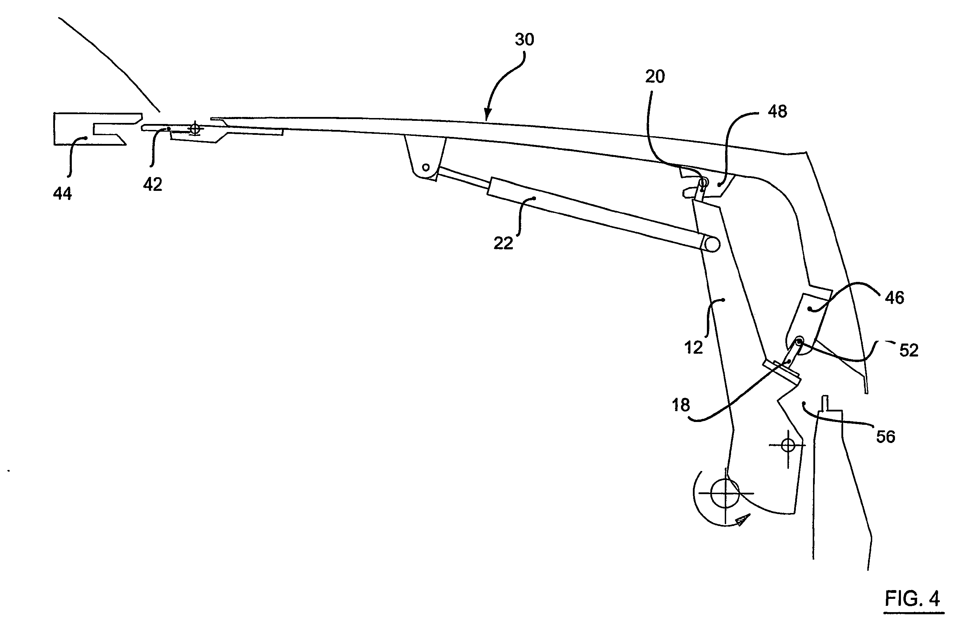

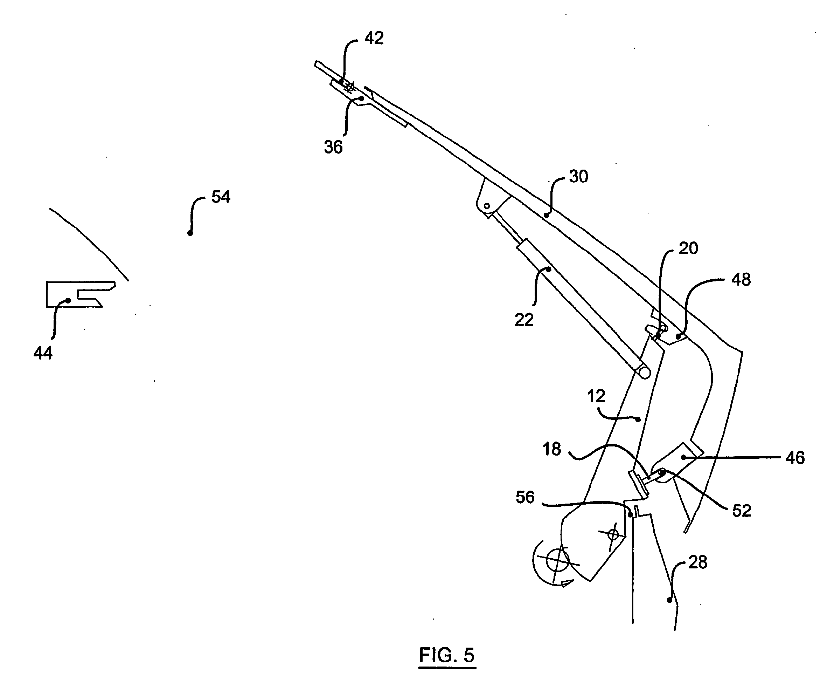

Gem. Fig. 3 wird durch Drehen des Ritzels 26 in Gegenuhrzeigerrichtung der Traghebel 12 um die Schwenkachse A in Uhrzeigerrichtung verschwenkt. Dabei bewegt sich der Schloßbügel 18, der in Ruhestellung des Traghebels 12 vorteilhafterweise vor und oberhalb der Schwenkachse A angeordnet ist, in einem Kreisbogen um die Schwenkachse A, so dass der hintere Bereich der Heckklappe 30 leicht angehoben und nach hinten bewegt wird. Beim weiteren Verschwenken des Traghebels 12 (Fig. 4) gelangt der Fanghaken 20 in die Ausnehmung der Fangkulisse 48, so dass die Heckklappe 30 zunächst translatorisch nach hinten (Fig. 4) und dann in Folge der Kinematik des Eingriffs zwischen dem Schloßbügel 18 und der Schloßfalle 46, die ein Gelenk mit der Achse 52 bilden, und dem Eingriff des Fanghakens 20 in die Fangkulisse 48 schräg aufwärts geklappt wird, so dass sich im vorderen Bereich der Heckklappe eine Aufnahmeöffnung 54 (Fig. 5) öffnet, durch die hindurch ein faltbares oder in sich starres Cabriolet-Dach in den Bereich unter der geschlossenen Heckklappe bewegt werden kann.

Wie insbesondere aus Fig. 4 ersichtlich, bewegt sich während der Anfangsphase der Verschwenkung des Traghebels 12 die Scharnierplatte 42 translatorisch aus der Kulisse 44 hieraus, so dass die Verschwenkbarkeit der Heckklappe 30 im Uhrzeigersinn freigegeben ist. Der Gasdruckdämpfer 22 bewirkt, dass der Fanghaken 20 in sicherem Eingriff mit der Fangkulisse 48 bleibt, so dass zwischen diesen Bauteilen keine Schloßfalle vorgesehen sein muß.

Der Eingriff zwischen dem Schloßbügel 18 und der Schloßfalle 46 ist bei der beschriebenen Verschwenkung der Heckklappe in ihre Aufnahmestellung vorteilhafterweise verriegelt, wobei dieses Verriegeln elektrisch geschehen kann, so dass gewährleistet ist, dass die Heckklappe 30, auch wenn auf ihren Vorderrand eine Kraft ausgeübt wird, in der Position gem. Fig. 5 bleibt.

Wie aus den Fig. 4 und 5 ersichtlich, ist es vorteilhaft, den Traghebel 12 mit einer Ausnehmung 56 auszubilden, die bei voll in seine Betriebsstellung gem. Fig. 5 verschwenktem Traghebel 12 den Oberrand des Heckabschlußbleches 28 aufnimmt. Auf diese Weise kann der Traghebel 12 möglichst weit hinten angeordnet sein, was für die Kinematik der Bewegung der Heckklappe in ihre Aufnahmestellung vorteilhaft ist, in der der Traghebel 12 gem. Fig. 5 über seine senkrechte Stellung hinaus nach hinten verschwenkt ist.

Zum Bewegen der Heckklappe 30 aus der Aufnahmestellung in die Schließstellung laufen die beschriebenen Vorgänge in umgekehrter Reihenfolge ab, wobei durch die Auflage der Scharnierplatte 42 auf der Wasserfangplatte 36 gewährleistet ist, dass die Scharnierplatte 42 in wohl definierter Weise in die Kulisse 44 hineingeschoben wird.

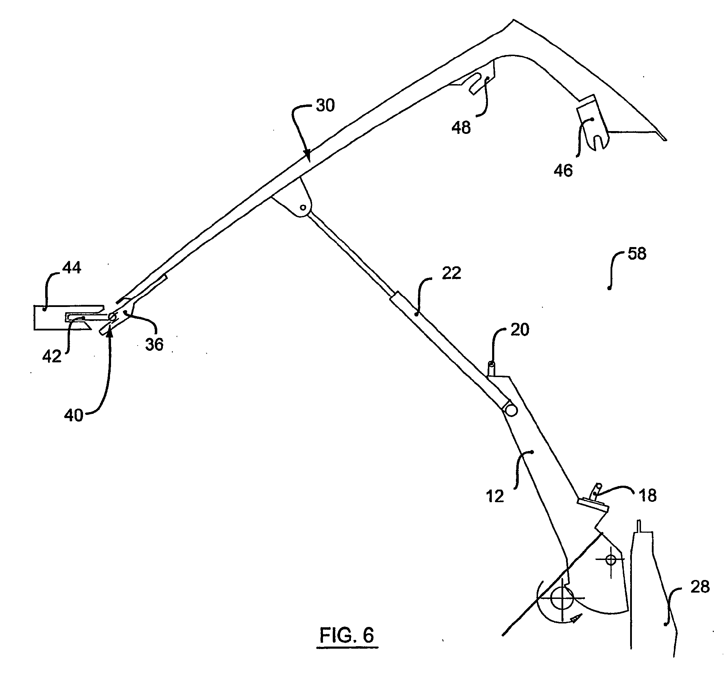

Fig. 6 stellt die Anordnung bei in Ladestellung verschwenkter Heckklappe 30 dar, wobei eine Ladeöffnung 58 freigegeben ist. Wie ersichtlich, kann die Heckklappe 30 nach Lösen des Eingriffs zwischen Schloßbügel 18 und Schloßfalle 46 um die Schwenkachse 38 des Scharniers 40 in Gegenuhrzeigerrichtung aufwärts verschwenkt werden, wozu kein Verschwenken des Traghebels 12 erforderlich ist und wobei das Verschwenken der Heckklappe 30 durch den Gasdruckdämpfer 22 unterstützt wird.

Wie insbesondere durch einen Vergleich der Fig. 3 und 6 ersichtlich, kann die Verschwenkung der Heckklappe 30 aus der geschlossenen Stellung in die Ladestellung zusätzlich dadurch unterstützt werden, dass der Traghebel 12 (bei entsprechender Ausbildung seines unteren Bereiches derart, das er nicht am Heckabschlußblech 28 anstößt) in Gegenuhrzeigerrichtung verschwenkt wird, bis die Knickstellung zwischen Gasdruckdämpfer 22 und Traghebel 12 nahezu in eine Streckstellung übergegangen ist.

Die Erfindung kann in vielfältiger Weise ausgestaltet und abgeändert werden.

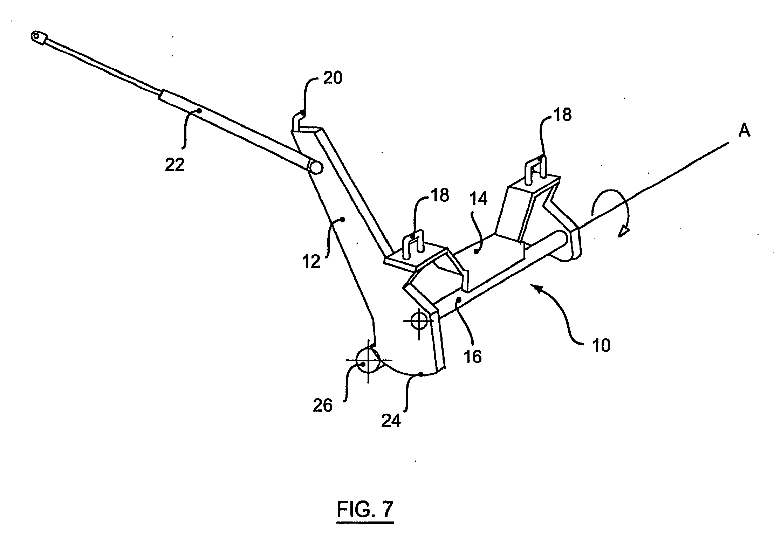

Gemäß Fig. 7, die der Ansicht der Fig. 2 entspricht, kann bei entsprechend steifer Gestaltung der Heckklappe nur an einer Fahrzeugseite ein Traghebel 12 vorgesehen sein.

Die Baugruppe aus Traghebeln und Stegbauteil, die einen stabilen Rahmen bildet, kann als Gussteil ausgebildet sein. Die beiden Traghebel müssen nicht zwangsläufig drehfest miteinander verbunden sein. Sie können einzeln gelagert und synchron mittels entsprechender Antriebe gesteuert sein. Die Schloßverbindung zwischen dem Traghebel und der Heckklappe kann in jedwelcher geeigneten Weise ausgeführt werden, solange eine gelenkige Verbindung zwischen den beiden Schloßteilen gewährleistet ist. Die Schloßverbindung zwischen den Bauteilen 18 und 46 kann das einzige Heckklappenschloß sein, das mechanisch, elektrisch oder sonstwie betätigt werden kann. Ein gesondertes Schloß zwischen Heckklappe und Heckabschlußblech kann dann entfallen. Der bzw. die Gasdruckdämpfer 22 kann bzw. können durch jedwelches elastische Element ersetzt sein, das über einen genügend großen Hub eine Vorspannung aufbaut. Alternativ kann an Stelle des oder der Gasdruckdämpfer(s) ein Hydraulikzylinder verwendet werden, der passiv dämpft und/oder vorspannt ist oder aktiv betätigt wird.

Der Fanghaken 20 kann an der Heckklappe 30 und die Fangkulisse 48 kann am Traghebel 12 ausgebildet sein.

Das Scharnier 40 (bzw. die Scharniere) kann als Viergelenkscharnier oder ein anderes Scharnier mit geeigneter Kinematik ausgebildet sein.

Die erfindungsgemäße Heckklappe kann nicht nur für Cabrios verwendet werden, sondern auch für Einsatzzwecke, bei denen ein Kofferraum alternativ von vorne her (durch die Aufnahmeöffnung 54) oder von hinten her (durch die Ladeöffnung 56) beladen werden soll.

### Bezugszeichenliste

- 10: Rahmenbaugruppe
- 12: Traghebel
- 14: Stegbauteil
- 16: Welle
- 18: Schloßbügel
- 20: Fanghaken
- 22: Gasdruckdämpfer
- 24: Verzahnung
- 26: Ritzel
- 28: Heckabschlußblech
- 30: Heckklappe
- 32: Oberwand
- 34: Rückwand
- 36: Wasserfangplatte
- 38: Schwenkachse
- 40: Scharnier
- 42: Scharnierplatte
- 44: Kulisse
- 46: Schloßfalle
- 48: Fangkulisse
- 50: Lagerkonsole
- 52: Gelenkachse
- 54: Aufnahmeöffnung
- 56: Ausnehmung
- 58: Ladeöffnung

## Patentansprüche

1. Vorrichtung zum wahlweisen Bewegen einer Heckklappe (30) eines Fahrzeugs aus einer Schließstellung in eine vorne angehobene Aufnahmestellung zur Freigabe einer Aufnahmeöffnung (54) und in eine hinten angehobene Ladestellung zur Freigabe einer Ladeöffnung (58), enthaltend wenigstens einen an einer Fahrzeugseite unterhalb der Heckklappe um eine in Querrichtung des Fahrzeugs verlaufende, fahrzeugfeste Schwenkachse (A) schwenkbaren Traghebel (12), welcher Traghebel für die Bewegung der Heckklappe aus der Schließstellung in die Aufnahmestellung schwenkbar ist und in Aufnahmestellung der Heckklappe deren einzige Halterung bildet, wobei
die Heckklappe (30) in ihrer Schließstellung im Bereich ihres hinteren Randes in Gelenkverbindung (18, 46) mit einem oberhalb seiner Schwenkachse befindlichen Bereich des Traghebels (12) ist, **dadurch gekennzeichnet, dass**
an einem oberen Endbereich des Traghebels ein erstes Fangbauteil (20) für einen Eingriff mit einem weiteren Tragbauteil (48) vorgesehen ist, das an der Heckklappe bezogen auf die Fahrzeugrichtung hinter dem ersten Fangbauteil (20) angeordnet ist, und
dass der Vorderrand der Heckklappe in deren Schließstellung über wenigstens ein Scharnier (40) mit dem Fahrzeug verbunden ist, wobei
die Heckklappe aus ihrer Schließstellung unter Lösen der Gelenkverbindung (18, 46) mit dem Traghebel um die Achse des Scharniers (40) in ihre Ladestellung schwenkbar ist und
aus ihrer Schließstellung in ihre Aufnahmestellung bewegbar ist, indem der Traghebel (12) unter Beibehaltung der Gelenkverbindung (18, 46) in eine Stellung geschwenkt wird, in der die Fangbauteile (20, 48) in gegenseitigen Eingriff kommen und die Verbindung der Heckklappe mit dem Fahrzeug über das wenigstens eine Scharnier (40) sich durch Rückwärtsbewegen der Heckklappe löst, und dann unter Anheben des Vorderrandes der Heckklappe weiter geschwenkt wird.

2. Vorrichtung nach Anspruch 1, **dadurch gekennzeichnet, dass** die Gelenkverbindung (18, 46) zwischen Traghebel (12) und Heckklappe (30) in deren Schließstellung oberhalb und vor der Schwenkachse des Traghebels angeordnet ist.

3. Vorrichtung nach Anspruch 1 oder 2, **dadurch gekennzeichnet, dass** die Gelenkverbindung (18, 46) als ein Schloß ausgebildet ist.

4. Vorrichtung nach einem der Ansprüche 1 bis 3, **dadurch gekennzeichnet, dass** ein Gasdruckdämpfer (22) vorgesehen ist, der von dem Traghebel (12) aus schräg nach vorne an der Heckklappe (30) angreift.

5. Vorrichtung nach einem der Ansprüche 1 bis 3, **dadurch gekennzeichnet, dass** ein Hydraulikzylinder vorgesehen ist, der von dem Traghebel (12) aus schräg nach vorne an der Heckklappe (30) angreift.

6. Vorrichtung nach einem der Ansprüche 1 bis 5, **dadurch gekennzeichnet, dass** am Vorderrand der Heckklappe (30) eine Scharnierplatte (42) derart angebracht ist, dass sie sich während der letzten Phase des Schwenkens des Traghebels (12) aus dessen Betriebsstellung in die Ruhestellung in eine fahrzeugfeste Kulisse (44) hineinbewegt.

7. Vorrichtung nach einem der Ansprüche 1 bis 6, **dadurch gekennzeichnet, dass** zum Verschwenken des Traghebels (12) ein motorisch angetriebenes Ritzel (26) vorgesehen ist, welches in eine am Traghebel ausgebildete Verzahnung (24) eingreift.

8. Vorrichtung nach einem der Ansprüche 1 bis 6, **dadurch gekennzeichnet, dass** zum Verschwenken des Traghebels (12) ein Hydraulikzylinder (24) vorgesehen ist.

9. Vorrichtung nach einem der Ansprüche 1 bis 8, **dadurch gekennzeichnet, dass** an jeder Fahrzeugseite ein Traghebel (12) angeordnet ist und die Traghebel starr miteinander verbunden sind.

10. Vorrichtung nach Anspruch 9, **dadurch gekennzeichnet, dass** die beiden starr miteinander verbundenen Traghebel (12) eine vormontierte Baugruppe (10) bilden, die in im Fahrzeugheck vorgesehene Lager einbaubar ist.

## Claims

1. A device for selectively moving a tailgate (30) of a vehicle from a closed position into a frontally raised receiving position, to expose a receiving opening (54), and into a loading position raised at the rear, to expose a loading opening (58), said device including at least one support lever (12) which can be pivoted on one vehicle side, below the tailgate, about a pivoting axis (A) extending in the transverse direction of the vehicle and being fixed with respect to the vehicle, which support lever can be pivoted from the closed position into the receiving position to move the tailgate and forms the tailgate's only support in the receiving position of the tailgate, wherein
the tailgate (30), in its closed position, is connected by a hinge joint (18, 46) in the region of its rear edge to a region of the support lever (12) located above the pivoting axis of the latter, **characterised in that** a first catching part (20) is provided in an upper end region of the support lever for engagement with another supporting part (48), said supporting part (48) being arranged on the tailgate behind the first catching part (20), with respect to the vehicle direction, and
**in that** the front edge of the tailgate, in the closed position of the tailgate, is connected to the vehicle by at least one hinge (40), wherein
the tailgate can be pivoted about the axis of the hinge (40) from its closed position into its loading position, while releasing the hinge joint (18, 46) with the support lever, and
the tailgate can be moved from its closed position into its receiving position by pivoting the support lever (12), while maintaining the hinge joint (18, 46), into a position in which the catching parts (20, 48) enter into mutual engagement and the connection of the tailgate to the vehicle via said at least one hinge (40) is released by moving the tailgate to the rear, and is then further pivoted while lifting the front edge of the tailgate.

2. The device according to claim 1, **characterised in that** the articulation (18, 46) between the support lever (12) and the tailgate (30) is arranged above and in front of the pivoting axis of the support lever in the closed position of the tailgate (30).

3. The device according to claim 1 or 2, **characterised in that** the articulation (18, 46) is provided as a lock.

4. The device according to any one of claims 1 to 3, **characterised in that** a gas pressure damper (22) is provided which acts on the tailgate (30) in an oblique forward direction, starting from the support lever (12).

5. The device according to any one of claims 1 to 3, **characterised in that** a hydraulic cylinder is provided which acts on the tailgate (30) in an oblique forward direction, starting from the support lever (12).

6. The device according to any one of claims 1 to 5, **characterised in that** a hinge plate (42) is attached to the front edge of the tailgate (30) in such a manner that said hinge plate (42) moves into a slotted piece (44), fixed with respect to the vehicle, during the final phase of the pivoting movement of the support lever (12) from its operative position into its resting position.

7. The device according to any one of claims 1 to 6, **characterised in that**, in order to pivot the support lever (12), a motor-driven pinion (26) is provided which enters into engagement with teeth (24) formed on the support lever.

8. The device according to any one of claims 1 to 6, **characterised in that** a hydraulic cylinder (24) is provided for pivoting the support lever (12).

9. The device according to any one of claims 1 to 8, **characterised in that** one support lever (12) each is disposed on either side of the vehicle and the support levers are rigidly connected to one another.

10. The device according to claim 9, **characterised in that** the two support levers (12), rigidly connected to one another, form a pre-mounted assembly (10) which can be installed in bearings provided in the rear of the vehicle.

## Revendications

1. Dispositif pour le déplacement sélectif d'un hayon (30) d'un véhicule, à partir d'une position de fermeture, vers une position de réception levée en avant pour libérer une ouverture de réception (54), et vers une position de chargement levée à l'arrière pour libérer une ouverture de chargement (58), ledit dispositif comprenant au moins un levier porteur (12) que l'on peut pivoter d'un côté du véhicule au-dessous de l'hayon, autour d'un axe de pivotement (A), fixe par rapport au véhicule, qui s'étend en direction transversale du véhicule, ledit levier porteur pouvant être pivoté de la position de fermeture vers la position de réception pour déplacer l'hayon et constituant le seul support de ce dernier en position de réception de l'hayon,
l'hayon (30), dans sa position de fermeture, étant relié par une articulation (18, 46) dans la région de son bord arrière avec une région du levier porteur (12) située au-dessus de l'axe de pivotement ce dernier, **caractérisé**
**en ce que** l'on prévoit dans une région d'extrémité supérieure du levier porteur un premier élément d'arrêt (20) venant en prise dans un autre élément porteur (48), ledit élément porteur (48) étant disposé sur l'hayon derrière le premier élément d'arrêt (20), par rapport à la direction du véhicule, et en ce que le bord avant de l'hayon, dans sa position de fermeture, est relié avec le véhicule par au moins une charnière (40),
l'hayon pouvant pivoter autour de l'axe de ladite charnière (40), de sa position de fermeture vers sa position de chargement, tout en séparant l'articulation (18, 46) avec le levier porteur, et
l'hayon pouvant être déplacé de sa position de fermeture vers sa position de réception par pivotement du levier porteur (12), tout en maintenant l'articulation (18, 46), vers une position dans laquelle les éléments d'arrêt (20, 48) viennent en prise mutuelle et le reliage de l'hayon avec le véhicule par ladite au moins une charnière (40) est séparée par déplacement de l'hayon vers l'arrière, et puis pivotant le levier porteur (12) encore plus tout en levant le bord avant de l'hayon.

2. Dispositif selon la revendication 1, **caractérisé en ce que** l'articulation (18, 46) entre le levier porteur (12) et l'hayon (30) est disposé au-dessus et devant l'axe de pivotement du levier porteur dans la position de fermeture de l'hayon (30).

3. Dispositif selon la revendication 1 ou 2, **caractérisé en ce que** l'articulation (18, 46) est réalisée sous la forme d'une serrure.

4. Dispositif selon l'une quelconque des revendications 1 à 3, **caractérisé en ce que** l'on prévoit un amortisseur à gaz comprimé (22) qui agit sur l'hayon (30) obliquement vers l'avant à partir du levier porteur (12).

5. Dispositif selon l'une quelconque des revendications 1 à 3, **caractérisé en ce que** l'on prévoit un vérin hydraulique agissant sur l'hayon (30) obliquement vers l'avant à partir du levier porteur (12).

6. Dispositif selon l'une quelconque des revendications 1 à 5, **caractérisé en ce qu'**une plaque à charnière (42) est montée sur le bord avant de l'hayon (30) de manière à ce que ladite plaque à charnière (42) entre dans une coulisse (44), montée fixe par rapport au véhicule, pendant la phase finale du pivotement du levier porteur (12) de sa position opérative vers sa position de repos.

7. Dispositif selon l'une quelconque des revendications 1 à 6, **caractérisé en ce que** l'on prévoit, pour le pivotement du levier porteur (12), un pignon (26) entrainé par moteur qui vient en prise avec des dents (24) réalisées sur le levier porteur.

8. Dispositif selon l'une quelconque des revendications 1 à 6, **caractérisé en ce que** l'on prévoit un vérin hydraulique (24) pour pivoter le levier porteur (12).

9. Dispositif selon l'une quelconque des revendications 1 à 8, **caractérisé en ce que** l'on dispose un levier porteur (12) de chaque côté du véhicule, les leviers porteurs étant reliés entre eux de manière rigide.

10. Dispositif selon la revendication 9, **caractérisé en ce que** les deux leviers porteurs (12), reliés entre eux de manière rigide, constituent un ensemble prémonté (10) que l'on peut installer dans des paliers disposés dans l'arrière du véhicule.
